(19) Europäisches Patentamt / European Patent Office / Office européen des brevets

(11) **EP 2 520 873 A2**

(12) **EUROPEAN PATENT APPLICATION**
published in accordance with Art. 153(4) EPC

(43) Date of publication:
**07.11.2012 Bulletin 2012/45**

(51) Int Cl.:
**F24J 2/10** (2006.01)

(21) Application number: **10834253.6**

(22) Date of filing: **30.11.2010**

(86) International application number:
**PCT/ES2010/000485**

(87) International publication number:
**WO 2011/067434 (09.06.2011 Gazette 2011/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2009 ES 200902268**

(71) Applicant: **Abengoa Solar New Technologies, S.A. 41018 Sevilla (ES)**

(72) Inventors:
• **QUERO GARCIA, Manuel**
  **41018 Sevilla (ES)**

• **PFANDER, Markus**
  **41018 Sevilla (ES)**
• **GERTIG, Christian**
  **41018 Sevilla (ES)**
• **OSUNA GONZALES-AGUILAR, Rafael**
  **41018 Sevilla (ES)**

(74) Representative: **Garcia-Cabrerizo y del Santo, Pedro Maria**
  **Oficina Garcia Cabrerizo, S.L.,**
  **Vitruvio, 23**
  **28006 Madrid (ES)**

(54) **METHOD FOR DISTRIBUTING HELIOSTATS IN TOWER PLANT**

(57) Method for distributing heliostats in a tower solar plant surrounded by a field of heliostats which reflect solar radiation on said tower. The distribution method for said heliostats consists of imitating the systems that are found in nature to maximize the collection of light (plant seeds, leaves and petals) and which is mathematically described by Fermat spirals in a number belonging to the Fibonacci series, through the placement, in polar coordinates, of each heliostat according to a radius and an angle defined by

$$r_n = c_n \cdot \sqrt{n} \; ;$$

$$\theta_n = n \cdot \frac{2 \cdot \pi}{\tau^2} ;$$

being:
o $r_n$ distance from the tower (2) to the position of the heliostat n (3),
o $\theta_n$ the angle formed by the radius $r_n$ with the radius $r_{n-1}$,
o n number of the heliostat (3) we wish to place,
o $c_n$ parameter that corresponds to the compactness index of the heliostats (3) in the plant,
o $\tau$ the irrational limit of the golden section, i.e.,

$$\tau = \sqrt{1 + \sqrt{1 + \sqrt{1 + \sqrt{1 + \sqrt{1 + \ldots}}}}}$$

FIGURE 2

## Description

## Technical area of the invention

This invention is encompassed within the area of electric energy generation from solar radiation through a plant like those with a central tower receptor.

The object of the invention consists of achieving optimal performance of the thermo electric plant through the selective distribution of the heliostats relative to the receptor tower.

## Background of the invention

A thermo electric solar plant is an industrial facility in which, through the heating of a fluid by way of solar radiation and its use in a convectional thermo dynamic cycle, the necessary power is produced to move an alternator for the generation of electric energy in the same way as in a classic thermal plant.

Constructively, it is necessary to concentrate the solar radiation in order to be able to achieve elevated temperatures, of over 300 °C, and thus obtain an acceptable performance in a thermo dynamic cycle, which would not be attainable with lower temperatures. The collection and concentration of solar rays is carried out with the use of mirrors with automatic orientation that are pointed towards a central tower where the fluid is heated. The set consisting of the reflecting surface and its orientation device is called a heliostat.

A tower plant — also known as a central receptor system — is formed by a concentrating system or heliostat field, which collects and concentrates the direct component of solar radiation over a receptor — where the conversion from radiant energy into thermal energy is produced — which is usually installed in the tower's upper part. The work fluid may be, among others, air, water vapour, molten sodium, or molten salts, depending on the chosen technology. For the ones with water vapour, the latter directly moves a turbine. For the others, the fluid carries the heat to a water vapour generator, with which the turbine moving the electric generator is powered.

All of these types of plants feature a configuration in which the heliostats are distributed as a function of the size and distance to the tower, following certain common radial dispositions from the tower and known as "corn field" and "radial staggered" Said configurations have the disadvantage that shadows and blockings are produced among the neighbouring heliostats and therefore some of them need to be eliminated in order to avoid this effect. Furthermore, these types of configurations have transition zones or empty areas with no heliostats which cause a lower utilization of the land.

## Description of the invention

The object of the invention is the application of the arrangement presented by leaves, stems and seeds in plants to the heliostats' specific distribution in the solar field. Said arrangement is known as phyllotaxis and it is characteristic of each plant species. Its function is for those plants, stems and seeds to be exposed to the sun with the least interferences possible from their companions maximizing the collection of light.

This specific distribution enables the heliostats to be able to be placed in such a way that they minimize the optical losses produced by shadows and blockings among the neighbouring heliostats, atmospheric attenuation, and an increase in the interception caused by the large distances between the heliostats and the tower, thus optimizing the use of the solar radiation upon being able to maximize the density of heliostats in the solar field.

The golden section or "divine proportion" (employed in Greek classicism) comes from the division of a lineal quantity (magnitude of distance, duration, etc., abstractable through the length of a segment) so that the relationship between the total length and the longest part is identical to the one resulting between the longest and shortest parts. With the necessary equation being solved (a / b = b / (a + b)), the value of the long section (on a segment with length 1) is approximately 0.618 (in reality it is an irrational number), and that of the shortest is around 0.382.

This value coincides with the limit towards which there is a tendency in the relationship between two consecutive terms in the Fibonacci series.

The arrangement of the different elements or heliostats in a plant is described by regularity in the divergence of the angle formed by the successive arranged elements. This angle divides a whole circle into a fraction which coincides with the numbers of the Fibonacci series (1/2, 1/3, 2/5, 3/8, 5/13 ...) which converge at the irrational limit of the golden section 0.382 ..., corresponding to the angle with 137.5 ... degrees.

For the determination of the aforementioned angle and the positioning of the heliostats in a thermoelectric plant, the system object of the invention is based on the placement of the heliostats following a pattern marked by the arrangement presented by leaves, stems and seeds. These are described by the following equations which define the Fermat bi-dimensional spirals, also known as parabolic spiral, in a number belonging to the Fibonacci series.

$$x_n = r_n \cdot \cos \theta_n$$

$$y_n = r_n \cdot \sin \theta_n$$

Where:

$$r_n = c_n \cdot \sqrt{n}$$

$$\theta_n = n \cdot \frac{2 \cdot \pi}{\tau^2}$$

Being:

- n E N natural number which corresponds with the number of the heliostat that we wish to place in a certain area.
- $r_n \in Q$, $r_n > 0$ a rational number higher than zero and which corresponds with the radius or distance to which each heliostat will be placed in a solar field with respect to the center of the tower's coordinate axis.
- $\theta_n \in [0, 2\pi]$ corresponding to the placement angle of each heliostat in the solar field.
- $\tau$ is the irrational limit of the golden section 0.382 ..., corresponding to the angle with 137.5 ... degrees. Being the irrational limit of the golden section:

$$\tau = \sqrt{1 + \sqrt{1 + \sqrt{1 + \sqrt{1 + \sqrt{1 + ...}}}}}$$

- $x_n$ the polar coordinate in X axis of the n heliostat. $y_n$ the polar coordinate in Y axis of the n heliostat.
- $c_n$ is a parameter that corresponds to the compactness index of the heliostats in the solar field. This parameter may be constant for all the heliostats or may also be different for each of them, achieving optimization in the field as a function of the following variables:

    ○ $h \in Q$, $h > 0$ is a rational number higher than zero and it corresponds to the height of the tower.
    ○ $d \in Q$, $d > 0$ is a rational number higher than zero and it corresponds to the minimum distance at which the heliostats must be placed in order to avoid contact among them.

    ○ $L \in [-\frac{\pi}{2}, \frac{\pi}{2}]$ corresponds to the latitude in which the solar field will be placed.
    ○ $\theta_n \in [0, 2\pi]$ corresponds to the placement angle of each heliostat.

The thermo electric plant that is configured through this heliostat arrangement allows to:

- Obtain a higher performance of the heliostat field due to:

    - The minimization of the losses due to shadows and blockings, as the heliostats are in an optimal positioning.
    - A decrease of the atmospheric attenuation and an increase in the interception by placing the heliostats more densely.

- Achieve a lower cost:

    - Higher performance caused by the decrease in losses, increases the annual production and saves heliostats.
    - Lower surface used due to the denser placement, it entails a lower distance among the heliostats. Consequently, there is a considerable reduction in the distance for cable placement and in the necessary construction of roads to access each of the heliostats for its cleaning and maintenance.
    - Avoiding the use of a complex software, including specialized staff. This is no longer necessary with this invention, which is much simpler.
    - The execution of intense optimization to achieve an optimal position is avoided, which implies savings in time and resources.

Likewise, the system object of the invention allows for the elimination of the presence of the current lines of transition and, if wanted, the elimination of symmetry, both present in the thermo electric plants that are operative nowadays.

**Description of the drawings**

In order to complement the description that is being carried out and with the object to help to a better understanding of the invention, a set of drawings is attached where, with an illustrative and non-limiting character, the following has been represented:

Figure 1.- Shows the current state of the art, "radial staggered" and "corn field" distributions.
Figure 2.- Shows a diagram of the distribution of heliostats resulting from the system that is the object of the invention.
Figure 3.- Shows a diagram of the distribution of the elements of the plant that is the object of the invention.
Figure 4.- Shows a diagram in which the location parameters of the heliostats with respect to the tower are defined.

**PREFERRED EMBODIMENT OF THE INVENTION**

In light of the drawings, described below is a preferred embodiment of the distribution method for heliostats object of this invention.

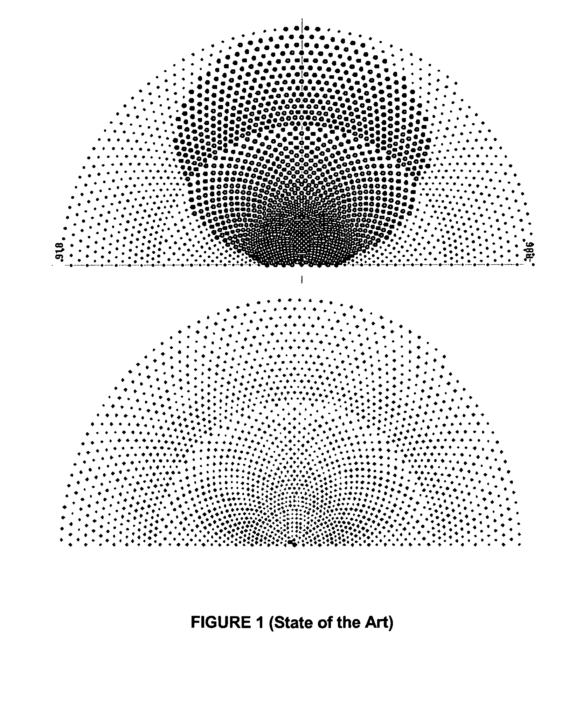

Figure 1 shows the distribution of the heliostats according to the configurations used up to this moment: "radial staggered" and "corn field".

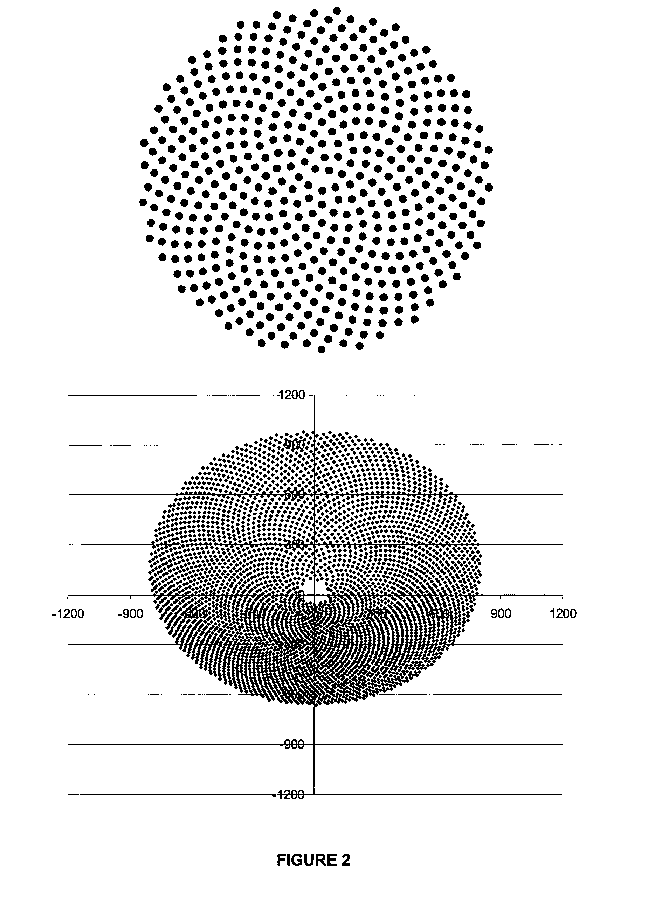

Figure 2 shows how the field of heliostats would be if it is distributed using the method of the invention.

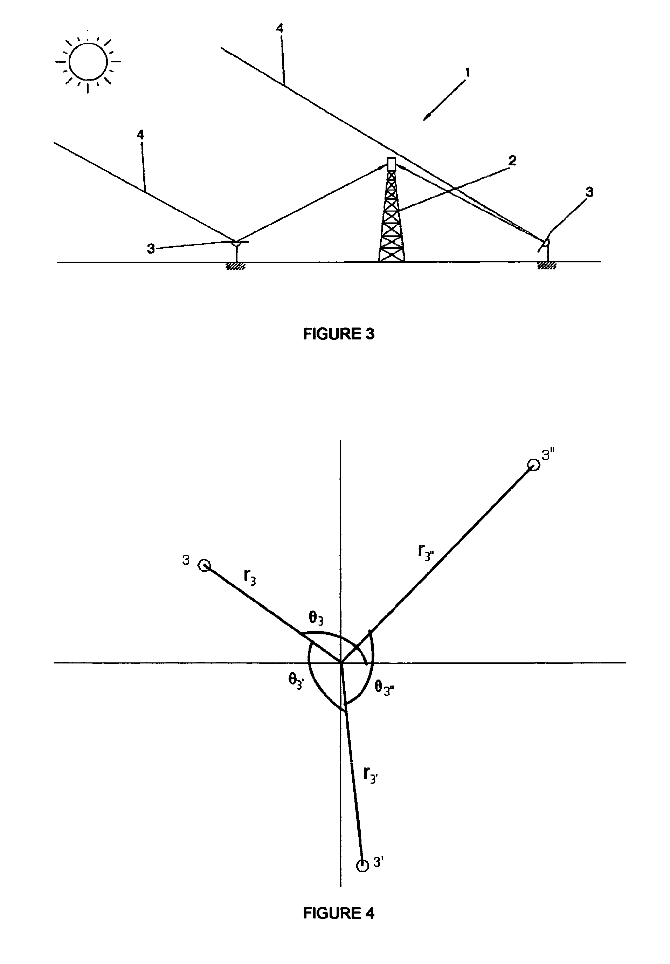

Figure 3 shows a thermo electric plant (1) placed in a certain location with a latitude "L", in which the receptor tower (2) is erected with a certain height "h" which the solar rays (4) will reach once they are reflected by heliostats (3) which are arranged around the receptor tower (2). The generation of electric energy is given by the incidence of the solar rays (4) reflected over the receptor tower (2) where they concentrate, heating a fluid that transfers heat which will be used to move a turbine and to generate electric energy.

In order for the concentration of the solar rays (4) reflected by the heliostats (3) to be optimal, these heliostats (3) are placed at a predetermined minimum distance "d" among them in order to avoid contact thereof. The thermo electric plant (1) features a number "$n_N$" of heliostats determined by the capacity or needs of the plant. Likewise, as shown in figure 4, the location of each of the "n" heliostats (3, 3', 3") is carried out according to a radius $r_n$ ($r_3$, $r_{3'}$, $r_{3"}$), which corresponds to a line that connects the heliostat (3, 3', 3") with the tower (2) and according to an angle $\theta_n$ ($\theta_3$, $\theta_{3'}$, $\theta_{3"}$) corresponding to the angle that forms the radius $r_n$ with the radius $r_{n-1}$.

In order to carry out the optimal distribution of the heliostats (3) in the thermo electric plant (1), the location is determined in polar coordinates for each of the heliostats (3) around the towers (2) following the pattern determined by:

$$r_n = c_n \cdot \sqrt{n} \; ;$$

$$\theta_n = n \cdot \frac{2 \cdot \pi}{\tau^2},$$

according to the previously presented formulas.

As previously mentioned in the invention's description, $c_n$ may be a constant for all the heliostats or it may vary for each one of them. For constant $c_n$ values, we obtain a distribution in the heliostat (3) whose plan view of the thermo electric plant's (1) heliostats (3) results in a diagram identical to the one that follows the distribution that is found in, for example, compound flowers and a set of seeds, with the most famous example being the distribution of a sunflower's seeds, as may be seen in figure 2. This arrangement is mathematically described by parabolic or Fermat spirals in a number belonging to the Fibonacci series.

For variable $c_n$ values, adapted to the terrestrial latitude in which the thermo electric plant (1) is located as well as the rest of the variables, L, d, h y $\theta_n$, a distribution of the heliostats (3) is obtained which increases the performance of the solar field. Said adaptation of $c_n$ may be seen in figure 2.

A formulation example that could work to define cn for each heliostat would be:

$$c_n(d, L, \theta_n) = \frac{k_1 \cdot d}{k_2 \cdot L + k_3 \cdot \theta_n}$$

In this case it would depend on the following variables:

- $d \in Q$, d > 0 rational number higher than zero. Corresponds to the minimum distance at which the heliostats must be placed in order to avoid contact among them.

- $L \in [-\frac{\pi}{2}, \frac{\pi}{2}]$. Corresponds to the latitude in which the solar field will be placed.
- $\theta_n \in [0, 2\pi]$. Corresponds to the placement angle for each heliostat.
- L and $\theta_n$ should not be zero at the same time.
- $k_1$, $k_2$, $k_3 \in Q$. Rational constants higher than zero.

In this case, the tower's height has been left out, but it would be another parameter that could be taken into account when obtaining a general equation for $c_n$.

This method for the distribution of elements, whose mathematical development was already known in the state of the art (although some parameters have been added in order to adjust it to the special circumstances of each placement), produces a surprising and, until now, unknown effect if applied to the distribution of heliostats in the solar field of a solar receptor tower, since the plant's optical losses are minimized, including those caused by the shadows and blockings among heliostats, achieving a higher efficiency of the system and, consequently, a decrease in cost.

Although this method is developed especially for its application in solar energy plants with a central receptor, its extension to other fields in the industry requiring similar characteristics is not ruled out.

**Claims**

1. Method for distributing heliostats in a tower solar plant (1) for the generation of electric energy from solar energy, of the type comprising a receptor tower (2) surrounded by a field of heliostats (3) which reflect the solar radiation to said tower (2), **characterized in that** the method for distribution of said heliostats (3) consists of imitating the systems that are found in nature for the collection of light (plant seeds, leaves and petals) through the placement of each heliostat according to a radius and an angle, defined in polar coordinates, by:

$$r_n = c_n \cdot \sqrt{n} \;;$$

$$\theta_n = n \cdot \frac{2 \cdot \pi}{\tau^2};$$

being:

- $n$ number of the heliostat (3) we wish to place,
- $r_n$ distance from the tower (2) to the position of the heliostat n (3),
- $\theta_n$ the angle formed by the radius $r_n$ with the radius $r_{n-1}$,
- $c_n$ parameter that corresponds to the compactness index of the heliostats (3) in the plant,
- $\tau$ the irrational limit of the golden section, i.e.,

$$\tau = \sqrt{1 + \sqrt{1 + \sqrt{1 + \sqrt{1 + \sqrt{1 + \ldots}}}}}$$

2. Method for distributing heliostats in a tower solar plant (1) according to claim 1, **characterized in that** $c_n$ or the compactness index of the heliostats (3) in the plant is a constant identical to all of the heliostats of the field.

3. Method for distributing heliostats in a tower solar plant (1) according to claim 1, **characterized in that** $c_n$ or the compactness index of the heliostats (3) in the plant is different for each one of them, achieving optimization of the field depending on the following variables:

- $h \in Q$, $h > 0$ is a rational number higher than zero and it corresponds to the height of the tower.
- $d \in Q$, $d > 0$ is a rational number higher than zero and it corresponds to the minimum distance at which the heliostats must be placed in order to avoid contact among them.
- $L \in [-\frac{\pi}{2}, \frac{\pi}{2}]$ corresponds to the latitude in which the solar field will be placed.
- $\theta_n \in [0, 2\pi]$ corresponds to the placement angle of each heliostat.

4. Method for distributing heliostats in tower solar plant (1) according to claim 3, **characterized in that** $c_n$ may be calculated as:

$$c_n(d, L, \theta_n) = \frac{k_1 \cdot d}{k_2 \cdot L + k_3 \cdot \theta_n} ,$$

being:

- $d \in Q$, $d > 0$ rational number higher than zero. Corresponds to the minimum distance at which the heliostats must be placed in order to avoid contact among them.
- $L \in [-\frac{\pi}{2}, \frac{\pi}{2}]$. Corresponds to the latitude in which the solar field will be placed.
- $\theta_n \in [0, 2\pi]$. Corresponds to the placement angle for each heliostat.
- $L$ and $\theta_n$ should not be zero at the same time.
- $k_1, k_2, k_3 \in Q$. Rational constants higher than zero.

5. Method for distributing heliostats in a tower solar plant (1) according to claim 1, **characterized in that** $\theta_n$ has values comprised between 0 and $2\pi$ for all of n.

6. Method for distributing heliostats in a tower solar plant (1) according to claim 1, **characterized in that** it prevents the blockings and shadows among the heliostats (3) without having transition lines between them and with the maximum heliostat density possible.

7. Method for distributing heliostats in a tower solar plant (1) according to claim 1, **characterized in that** it is mathematically described by the placement of the heliostats following the shape of the parabolic or Fermat spirals, which generate in Fibonacci numbers, or which is the same, the angle in which each of the successive spirals is arranged has a tendency towards the golden number.

FIGURE 1 (State of the Art)

FIGURE 2

**FIGURE 3**

**FIGURE 4**